# EUROPEAN PATENT SPECIFICATION

(11) **EP 0 911 685 B1**
(45) Date of publication and mention of the grant of the patent: **20.12.2006**
(21) Application number: 98912721.2
(22) Date of filing: 08.04.1998
(51) Int. Cl.: G03B 21/62, G09F 9/00, H04N 5/74

(54) **DEVICE FOR HOLDING REAR PROJECTION SCREEN, METHOD FOR HOLDING REAR PROJECTION SCREEN, SCREEN HOLDING FILM BODY, AND METHOD FOR HOLDING SCREEN HOLDING FILM BODY**
HALTEVORRICHTUNG FÜR DURCHSICHTPROJEKTIONSSCHIRM, VERFAHREN ZUM HALTEN DES SCHIRMES, SCHIRMHALTEFILM UND VERFAHREN ZUM HALTEN DES FILMES
DISPOSITIF DESTINE A MAINTENIR UN ECRAN DE PROJECTION PAR TRANSPARENCE, PROCEDE DE MAINTIEN DUDIT ECRAN, FILM MAINTENANT L'ECRAN ET PROCEDE DE MAINTIEN DUDIT FILM

(30) Priority: 18.04.1997 JP 10200997
(43) Date of publication of application: 28.04.1999
(73) Proprietor: SONY CORPORATION, Tokyo 141-0001 (JP)
(72) Inventor: UWAGAWA, Satoshi, Shinagawa-ku Tokyo 141-0001 (JP); TSUCHIYA, Masao, Shinagawa-ku Tokyo 141-0001 (JP); UNO, Yoshihiko, Shinagawa-ku Tokyo 141-0001 (JP); NATORI, Takehisa, Shinagawa-ku Tokyo 141-0001 (JP)
(74) Representative: Nicholls, Michael John
(86) International application number: PCT/JP1998/001616
(87) International publication number: WO 1998/048324

(56) References cited:
- JP-A- 1 302 338
- JP-A- 7 307 912
- JP-A- 7 319 071
- JP-A- 9 172 593

## Description

The present invention relates to a retaining apparatus of a backproject screen for holding a split lens and a retaining method of the backprojection screen for holding a split lens in order to project a picture light from the back of the screen made up of a plurality of split lenses.

Also, the present invention relates to a screen retaining film body used to retaining a screen made up of a split lens and a retaining method of the screen retaining film body.

In order to form a large-sized display, what is called a backproject type of display has been proposed. This type of display has a backproject screen in the rear of which, e.g. three cathode ray tubes (CRT) are disposed. These three cathode ray tubes are arranged to project a large-sized image by projecting an image of each colour of three primary colors to the screen from the backside thereof.

This type of screen is formed by superposing a lenticular lens on a Fresnel lens. This lenticular lens is a lens in which a multiplicity of minute lenses are closely packed, and which is able to spread an incident light to such an extent that light distribution nearly meets the demand for use. In other words, the lenticular lens has a light spreading function.

Such a screen for a large-sized picture is formed by arranging a plurality of split lenses each of which has a lenticular lens superposed on a Fresnel lens.

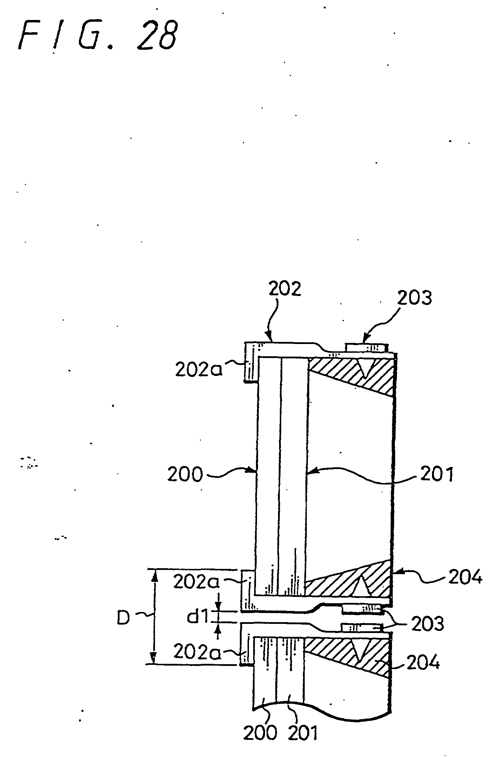

FIG. 28 to FIG. 32 show a conventional screen retaining apparatus. In the conventional retaining apparatus of FIG. 28, four end faces (four sides) of a lenticular lens 200 and a Fresnel lens 201 are fixed by a metallic plate 202. This metallic plate 202 is in turn fixed by screws 203 to a screen fitting frame 204.

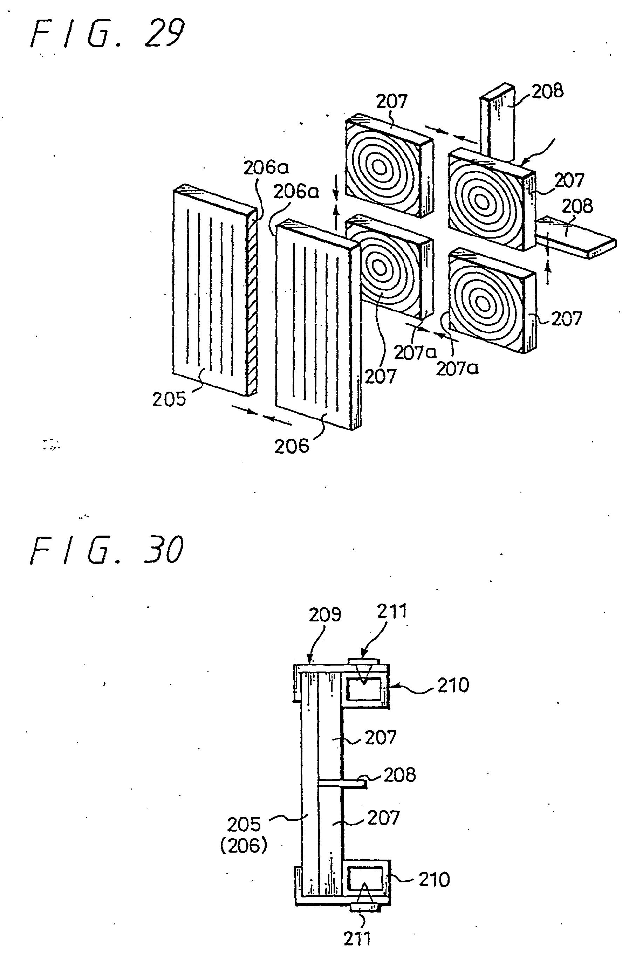

The retaining apparatus of FIG. 29 and FIG. 30 is such that what we call a seamless screen is formed, in which slightly large-scale lenticular lenses 205, 206 are fixed together by an adhesive 206a and these lenticular lenses 205, 206 are arranged to cover four Fresnel lenses 207. These Fresnel lenses 207 are glued to one another by an adhesive 207a and in the vicinity of adjacent Fresnel lenses 207, 207 are arranged gobos 208. These lenticular lenses 205, 206 and four Fresnel lenses 207 glued in this manner are fixed to a screen frame 210 by screws 211 using a metallic plate 209 of FIG. 30.

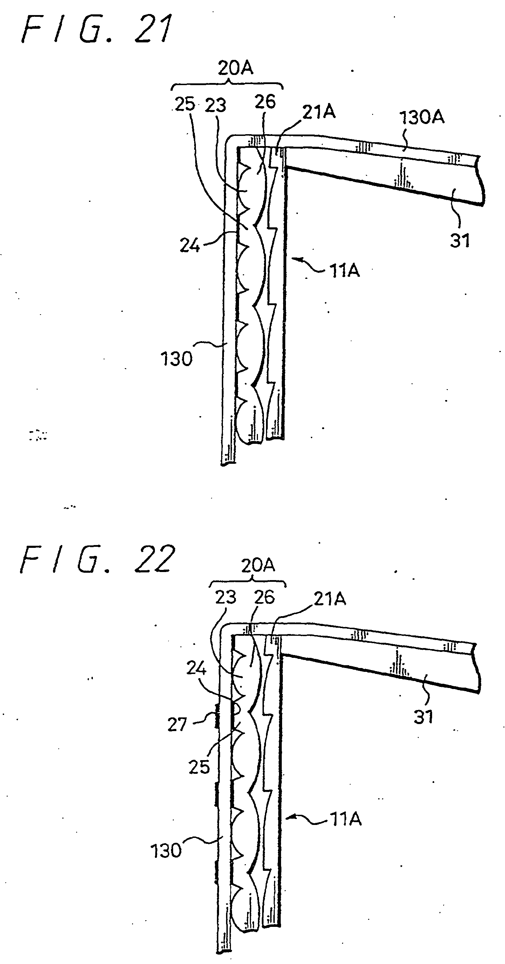

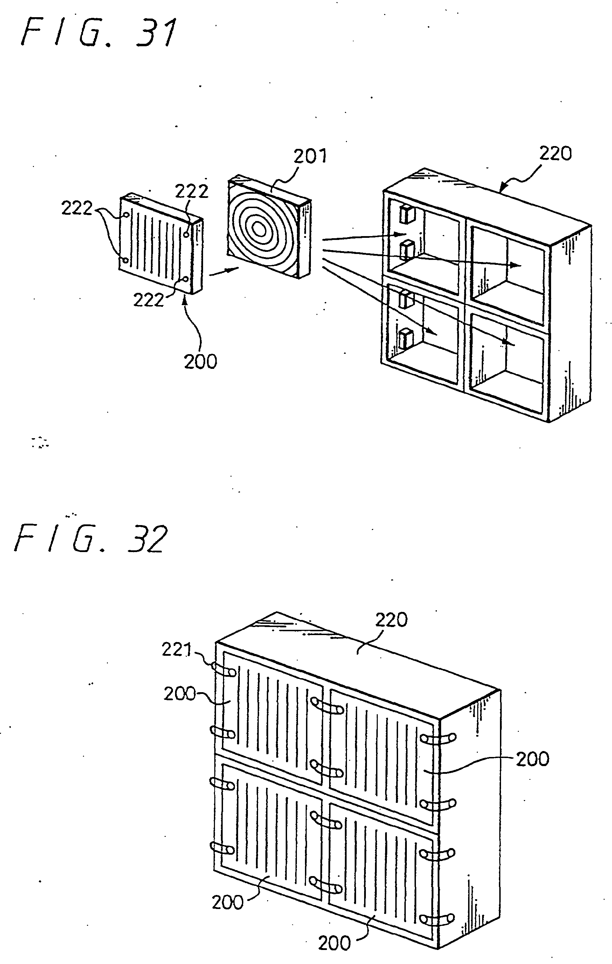

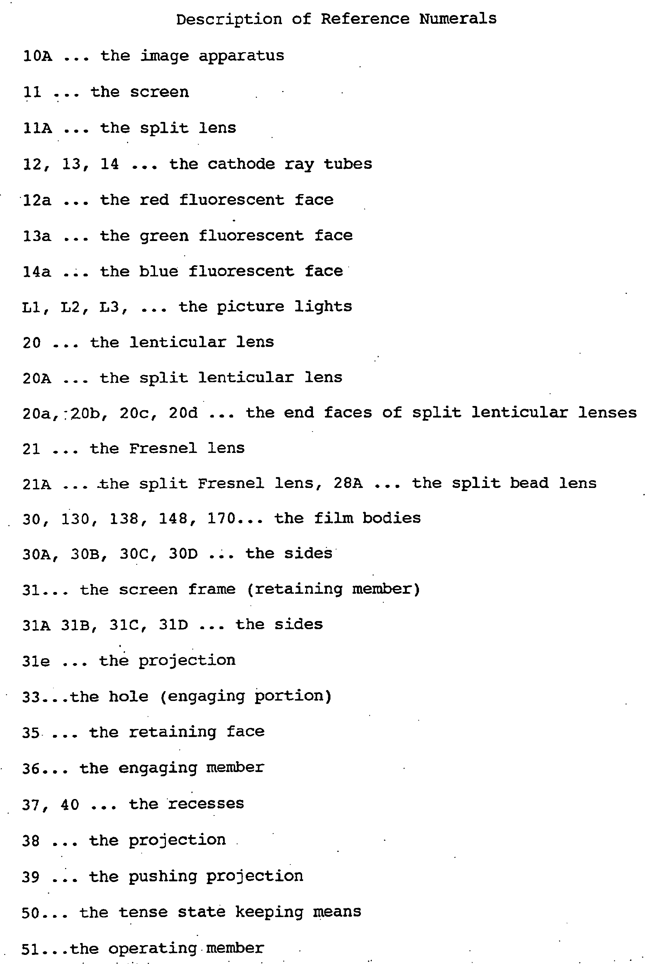

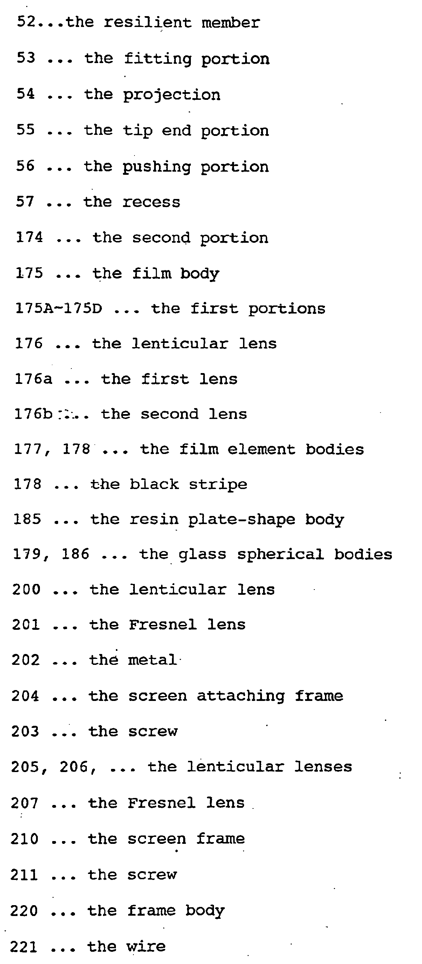

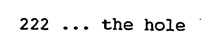

Another conventional screen retaining apparatus shown in FIG. 31 and FIG. 32 includes a frame body 220 into which frame body 220, a lenticular lens 200 and a Fresnel lens 201 are fitted. The lenticular lens 200 is fixed to the frame body 220 by wires 221 as shown in FIG. 22. Such a retaining structure requires the grid-like frame body 220.

However, the aforesaid conventional retaining apparatus will raise the following problem.

In the conventional retaining apparatus of FIG. 28, it is necessary to bend a part 202a of the metallic plate 202 onto the front side of the lenticular lens 200. Accordingly, a distance D between the parts 202a, 202a of the metallic plates 202 of an adjacent pair of the lenticular lenses 200 and the Fresnel lenses 201 will become, e.g. about 4.6 mm. This means that a projected picture will have missing portions due to that distance. The metallic plate 202 is fitted to the screen fitting frame 204 by the screws 203. Thus, a gap dl is also required so that adjacent screws 203, 203 may not contact with each other.

According to the conventional retaining apparatus of FIG. 29 and FIG. 30, what we call the seamless type of screen can be formed, which has no joint between the adjacent lenticular lenses 205; 206 and the Fresnel lenses 207. However, it is necessary to perform the gluing and other assembling work of these lenticular lenses and Fresnel lenses in a screen setting site, which causes high costs to be unavoidable.

Next, in the conventional retaining apparatus of FIG. 31 and FIG. 32, it is necessary to perform the drilling work of apparatus 222 through each lenticular lens 200 for passing the wire 221 so as to form the screen, and besides, the lenticular lens 200 must be fixed to the frame body 220 using the apparatus 222 and wires 221. Thus, it is required to perform such an assembly work in the screen setting site, which also makes high costs to be unavoidable.

Other examples of conventional retaining apparatuses are disclosed in JP-A-07319071 and JP-A-01302338.

Therefore, it would be desirable to provide a retaining apparatus of a backproject screen which is capable of eliminating th above problem, preventing the occurrence of missing parts in a projected picture by decreasing the joints on the projected picture as much as possible, and being assembled easily and a screen retaining method of the backproject screen.

According to the present invention, there is provided a retaining apparatus of a backproject screen for holding a split lens in order to project a picture light from the back of a screen made up of a plurality of split lenses, comprising a retaining member for holding the film body, characterised in that: the retaining member has a retaining surface extending rearwardly of the split lens; and the apparatus further comprises: a film body which is connected to an end face of the split lens and is arranged on the retaining surface, the film body having an engaging portion; an engaging member which is set on the retaining member and engaged with the engaging portion of the film body; and a tense state keeping means which maintains a state in which the film body is made tense and the split lens is held against the retaining member by moving the engaging member along the retaining surface of the retaining member.

In the retaining apparatus of backprojection screen with such arrangement the film body is set in connection with end face of the split lens and has an engaging portion. The retaining member holds the film body. The engaging member is set on the retaining member under a condition that the engaging member is engaged with the engaging portion of the film body. The tense state keeping means is enabled to maintain a state in which th film body is made tense and the retaining member is caused to hold the split lens by moving the engaging member relative to the retaining member. This allows the tense state keeping means to provide the film body with tensional force by only moving the engaging member on the retaining member, thereby enabling the film body to make the retaining member to hold the split lens securely and easily. Moreover, because the film body is employed for holding the split lenses, almost no missing part will be caused in the projected picture.

It is possible that the split lens has four end faces, and the film body is bonded on the four end faces of split lens and then fixed.

Also, it is possible that the split lens has four end faces, the film body has a light transmission property, and the film body is made to have a first portion to cover the four end faces of split-lens and second portion to cover the whole face of split lens.

In this case, the first portion for covering the four end faces of split lens and the second portion for covering the whole face of split lens, it is needless to bond the film body to the split lens through the adhesive or the like but it is sufficient that the second portion of film body is disposed on the front side of split lens to cover the same. Therefore, the bonding work of film body becomes unnecessary and hence the assembly work of screen becomes simple.

The split lens may have portions having no lens action and extending along substantially the same plane, and the film body is bonded to said portions substantially same plane and this portion makes it possible to bond the film body having the first and second portions to the split lens.

In this case, the bonding area between the film body and the split lens becomes large so that the bonding strength is stronger and it is suitable to a rental use in which assemble and disassemble are repeated.

Further, it may be that said portions are light absorbing and a light absorbing portions is provided on an outer face of the film body at substantially the same positions as said portions of the split lens.

In this case, the film body is bonded on this portion and the film body is provided with a light absorbing portion on its outer face at its portion substantially same as the above-mentioned portion, the bonding strength between the film body and the split lens is strong. Thus, it is suitable to a rental use in which assemble and disassemble are repeated and also a screen with a high contrast ration may be formed.

In the film body, it is possible that its second part is formed as the split lens, for example, a lenticular lens or bead lens, which will be described later on, and the thickness of its first portion is set less than 0.5mm.

When the second portion of film body is formed as a split lens and the thickness of first portion is set less than 0.5mm, the film body itself becomes to have a lens action. When the split lens is made up of a plurality of lenses, a part of split lens is integrated with the film body. Thus, the number of parts of split lens held by the film body is decreased with the result that the arrangement of screen retaining apparatus becomes simplified and also the assembly of screen is simplified further.

Further, the split lens may have four end faces, and the film body may be arranged to have an end face covering portion to cover the four end faces of split lens and a split lens covering portion to cover part of the lens surface of split lens.

The engaging member of film body may be a hole into which a projection of the engaging portion is fitted.

The tense state keeping means may include:
an operating member for moving the engaging member along the retaining surface of the retaining member; and
a resilient member which is arranged between the operating member and the engaging member, and holds the engaging member elastically on the retaining member after the engaging member has been moved by the operating member.

The split lens may be formed of a lenticular lens and a Fresnel lens.

The split lens may be formed of a bead lens and a Fresnel lens.

The film body may be bonded to an end face of lenticular lens of split lens and then fixed.

The film body may be bonded to an end face of bead lens of split lens.

Embodiments of the present invention will be described below in detail with references to the accompanying drawings, in which:
FIG. 1 is a structural diagram showing an example of an image apparatus to which the backproject screen retaining apparatus according to the present invention can be applied.
FIG. 2 is an exploded perspective view showing an example of one unit which constitutes the screen of FIG. 1.
FIG. 3 is a cross-sectional view showing a split lens, a screen frame, a tense state keeping means and so on in the unit of FIG. 2.
FIG. 4 is an exploded perspective view showing main portions of the screen frame, an engaging member and the tense state keeping means.
FIG. 5A is a perspective view-showing an example of a film body and FIG. 5B is a perspective view showing another example of the film body.
FIG. 6 is a perspective view of a main portion of the film body showing an example of an engaging aperture.
FIG. 7 is an explanatory diagram used to show a state in which a screen frame is set to the film body bonded to a split lens.
FIG. 8 is an explanatory diagram showing a state in which an engaging member is to be engaged with the film body placed on the screen frame.
FIG. 9 is an explanatory diagram showing a state in which an operating member is to be fitted to the screen frame.
FIG. 10 is an explanatory diagram showing a state in which the operating member is to be turned in the direction of operation.
FIG. 11 is an explanatory diagram showing a midway state in which the operating member is turned in the direction of operation.
FIG. 12 is an explanatory diagram showing a state in which the operating member has been completely operated and the film body is kept in its tensity through a resilient member and the engaging member.
FIG. 13 is a perspective view showing another mode for carrying out the present invention.
FIG. 14 is a sectional view showing a part of the mode in FIG. 13.
FIG. 15 is a perspective view showing still another mode for carrying out the present invention.
FIG. 16 is a sectional view showing a part of the mode in FIG.15..
Fig. 17 is an exploded perspective view showing yet another mode not part of the present invention.
Fig. 18 is an explanatory diagram showing an assembly state in the mode of FIG. 17.
Fig. 19 is a exploded perspective view showing a further different mode not part of the present invention.
Fig. 20 is an explanatory diagram showing an assembly state in the mode of FIG. 19.
FIG. 21 is a sectional view showing a main part of a yet further made for carrying out the present invention.
FIG. 22 is a sectional view showing a main part of a still further mode for carrying out the present invention.
FIG. 23A is a perspective view showing a different example of a split lens of the present invention and FIG. 23B is a sectional view showing a part of the split lens in FIG. 23A in an enlarged scale.
FIG. 24 is an exploded perspective view showing a yet further mode carrying out the present invention.
FIG. 25 is an enlarged sectional view showing a main part of an example of the film body in FIG. 24.
FIG. 26 is an explanatory diagram showing an assembled state of the mode in FIG. 25.
FIG. 27 is a sectional view showing a main part of a still further mode for carrying out the present invention.
FIG. 28 is a sectional view showing an example of a conventional retaining apparatus.
FIG. 29 is a perspective view showing another example of the conventional retaining apparatus.
FIG. 30 is a sectional view showing the conventional retaining apparatus in FIG. 29.
FIG. 31 is a perspective view showing still another example of conventional retaining apparatus.
FIG. 32 is a perspective view showing an example of a screen assembled by the retaining apparatus in FIG. 31.

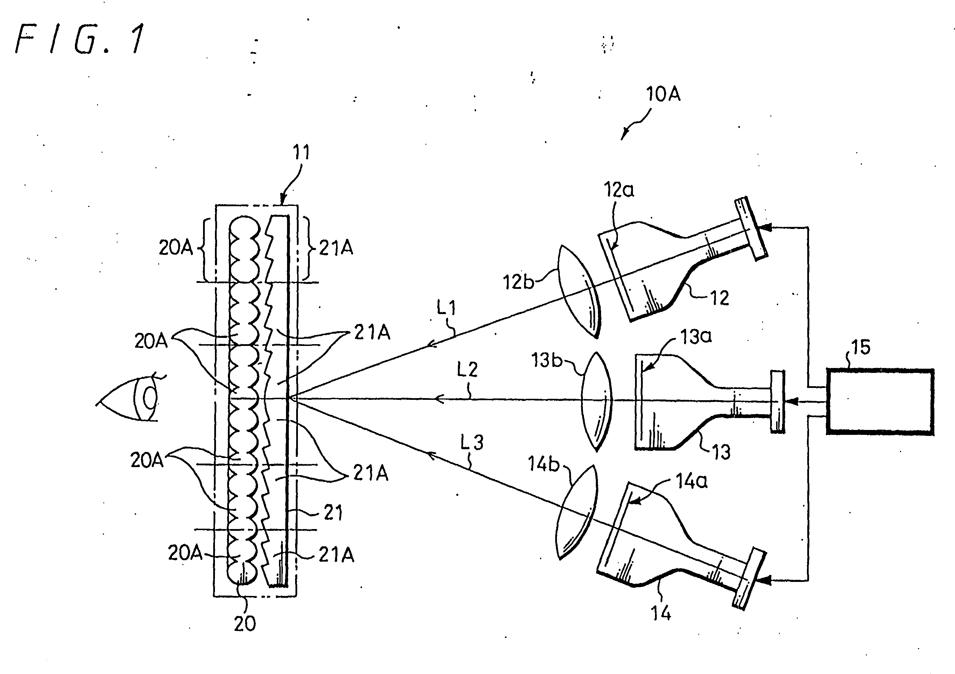

FIG. 1 shows an example of an image apparatus comprising a screen in which a retaining apparatus of a backproject screen according to the present invention is utilized.

The image apparatus 10A in FIG. 1 includes a screen 11 and three cathode ray tubes 12, 13 and 14 arranged in the back of the screen 11. To these cathode ray tubes 12, 13 and 14 are arranged corresponding projective lenses 12b, 13b and 14b, respectively. The cathode ray tubes 12, 13 and 14 have red, green and blue fluorescent substances 12a, 13a and 14a, respectively.

A driving circuit 15 directs to drive the cathode ray tubes 12, 13 and 14, according to which the cathode ray tubes 12, 13 and 14 project picture lights L1, L2 and L3 onto the backside of the screen 11 where they are superposed to make an image. This makes it possible to compose colour picture lights.

The screen 11 comprises a lenticular lens 20 and a Fresnel lens 21. The Fresnel lens 21 is arranged on the side of the cathode ray tubes 12, 13 and 14.

The color picture light composed by the cathode ray tubes 12 13 and 14 is refracted by the Fresnel lens 21 in a direction almost perpendicular to the surface of screen 11 and then condensed and diverged appropriately by the lenticular lens 20. Accordingly, a user can see the colour picture projected onto the screen 11 on a large-sized picture of screen 11.

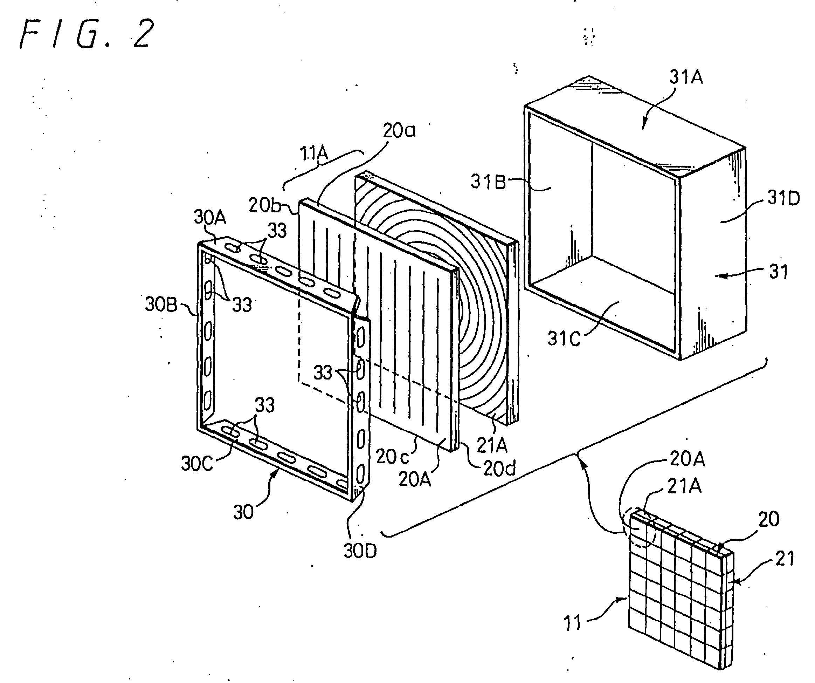

As shown in FIG. 1 and FIG. 2, the Fresnel lens 21 of the screen 11 is constructed by arranging (multipiling) a plurality of split Fresnel lenses 21A. Similarly, the lenticular lens 20 is constructed by arranging (multipiling) a plurality of split lenticular lenses 20A. The split Fresnel lens 21A and the split lenticular lens 20A form a split lens 11A together.

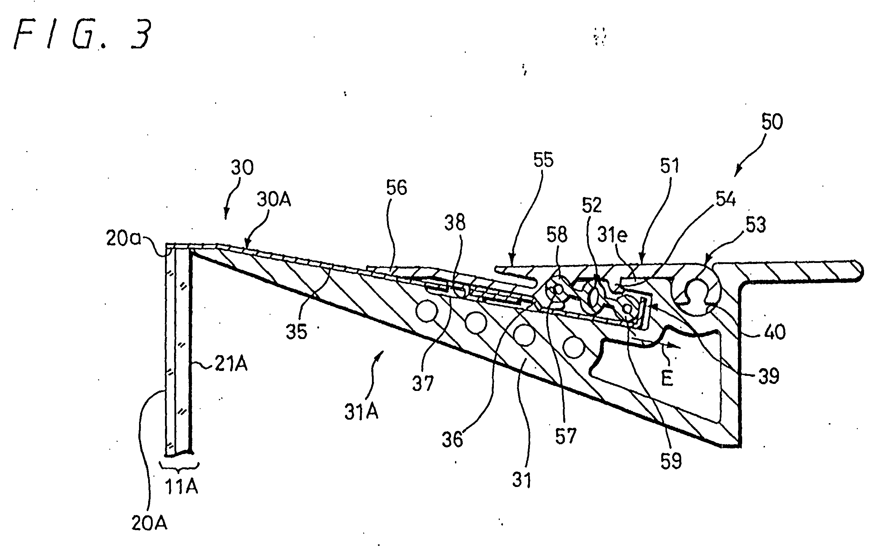

FIG. 2 shows the split lenticular lens 20A, the split Fresnel lens 21A, a film body(so-called retaining film body) 30 and a screen frame 31. A set of the film body 30, the split lenticular lens 20A, the split Fresnel lens 21A and the screen frame 31 can be unified in such a manner as shown in FIG. 3. The screen frame 31 in FIG. 2 is shown simply for simplifying the drawing.

While FIG. 3 shows upper parts of the film structure 30, the split lenticular lens 20A, the split Fresnel lens 21A and the screen frame 31 in FIG. 2 in a representative fashion, the other parts have the same construction. The screen frame 31 shown in FIG. 3 illustrates the upper part of the screen frame 31 shown in FIG. 2.

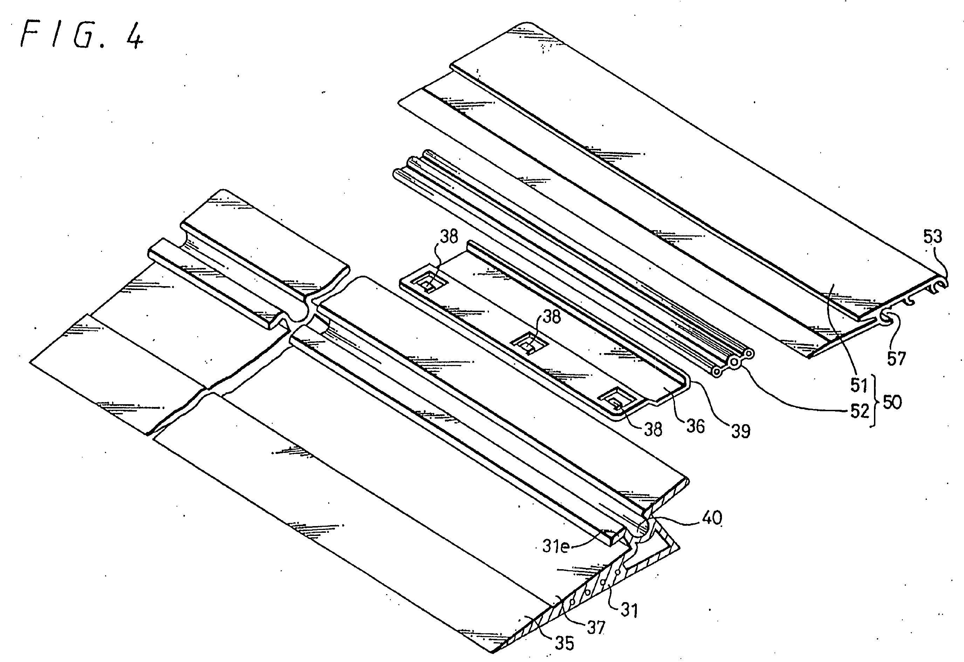

FIG. 4 is an exploded perspective view showing the screen frame 31, an engaging member 36 for retaining the film body 30 attached with the split lens 11A to the screen frame 31 and a tense state keeping means 50 formed of an operating member 51 and a resilient member 52 shown FIG. 3.

The screen frame 31 is formed to be a rectangular frame as a whole, but the engaging member 36, the operating number 51 and the resilient member 52 are divided plural in accordance with the lengths of upper and lower sides and both sides of the screen frame 31, respectively.

The screen frame 31 has a first side part 31A, a second side part 31B, a third side part 31C and a fourth side part 31D. While FIG. 3 and FIG. 4 show the first side part 31A of the screen frame 31 as a representative, the second side part 31B to the fourth side part 31D of the screen frame 31 have the similar structure.

On the left side of FIG. 3, the split lenticular lens 20A and the split Fresnel lens 21A are arranged superposing with each other.

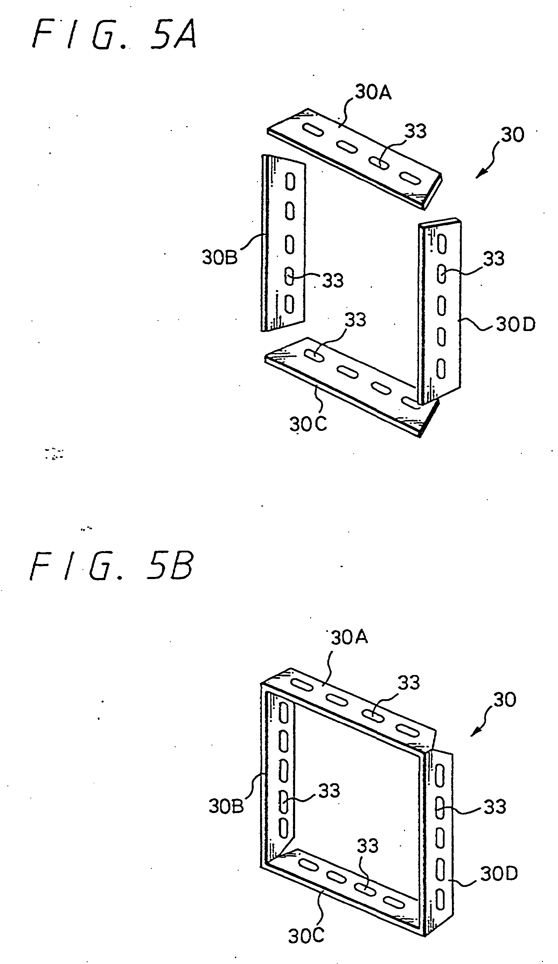

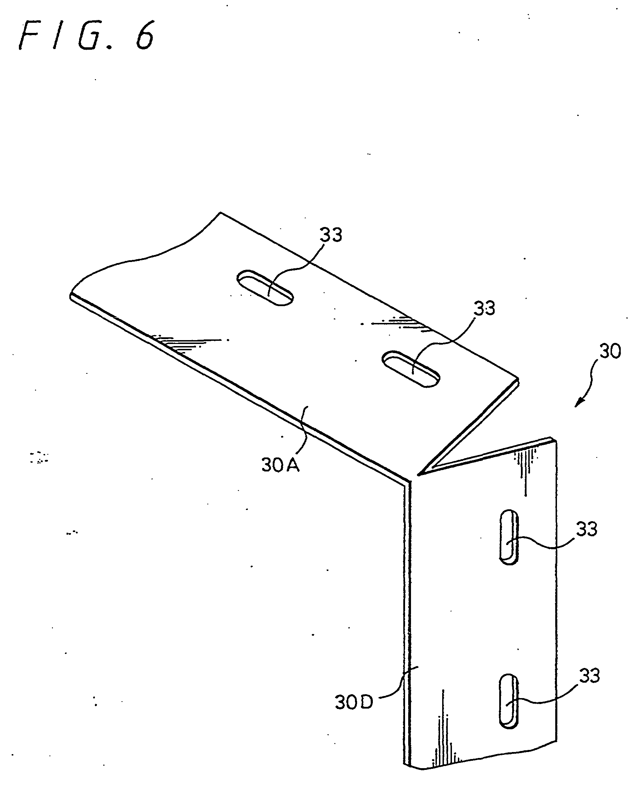

The film body 30 shown in FIG. 2 is a framelike film having, for example, a first side 30A, a second side 30B, a third side 30C and a fourth side 30D which is divided into four parts or continuous with no junction. It is a very thin film which is transparent or opaque and made of, e.g. plastics. Namely, FIG. 5A shows a film body 30 in which it is divided into four or to be the first side 30A, the second side 30B, the third side 30C and the fourth side 30D, which are separated one another. FIG. 5B is a film body 30 in which the first side 30A, the second side 30B, the third side 30C and the fourth side 30D are continuous with no junction as a frame-like shape. A plurality of holes(so-called engaging hole) 33 are arranged in series on the first side 30A to the fourth side 30D of the film body 30, respectively. These holes 33 correspond to the engaging portions formed on the film body 30. The shape of hole 33 may be a circular shape, a rectangular shape or other various shape. However, when in consideration of assembly workability, as shown in FIG. 6, a so-called elongated hole, for example, elongated circle, elongated rectangular shape or the like is preferred.

Parts of the first side 30A to the fourth side 30D of the film structure in FIG. 2 are made to be glued to a first end face 20a; a second end face 20b, a third end face 20c and a fourth end face 20d of the split lenticular lens 20A by means of, e.g. an adhesive, respectively.

FIG. 3 shows the first side 30A of the film body 30 as a representative, in which figure the first side 30A is fixed to the first end face 20a of the split lenticular lens 20A by means of the adhesive.

Next, as shown in FIG. 3 and FIG. 4, the screen frame 31 is arranged inside the film structure 30 to form a retaining means for holding the film structure 30. A film body retaining face 35 of the screen frame 31 is formed in a manner that it inclines downward as goes away from the split lens 11A (This is made up of the split lenticular lens 20A and the split Fresnel lens 21A.). An about middle portion of the screen frame 31 is a portion where the engaging member 36 is arranged, and has a recess 37.

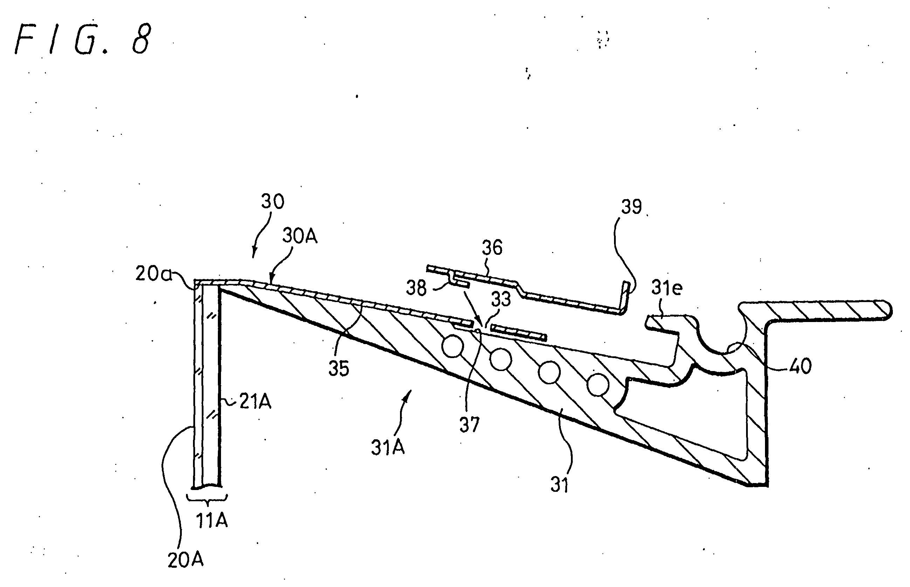

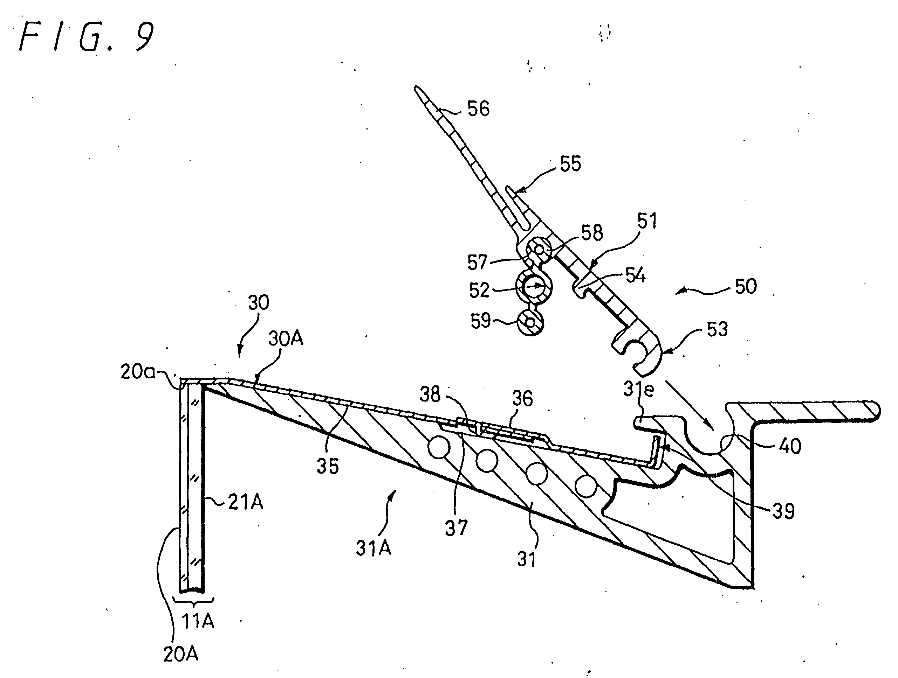

This engaging member 36 is formed, as shown in FIG. 4 and FIG. 8, by bending, for example, a metallic plate and has a projection 38 by cutting up. This projection 38 is located underside of the engaging member 36. The projection 38 of the engaging member 36 is to be engaged with the hole 33 of the first side 30A of film structure 30 in the engaged state as shown in FIG. 8 and FIG. 9, and then the engaging member 36 is received in the recess 37 of the screen frame 31, i.e. the retaining member. On a rear end portion of the engaging member 36 is erected a push projection 39.

A recess 40 is formed on a rear end portion of the screen frame 31 as shown in FIG. 3 and FIG. 4. The tense state keeping means 50 is disposed in the recess 40. The tense state keeping means 50 has a function to make the film structure 30 tense on the screen frame 31 by pushing the engaging member 36 in the direction of E.

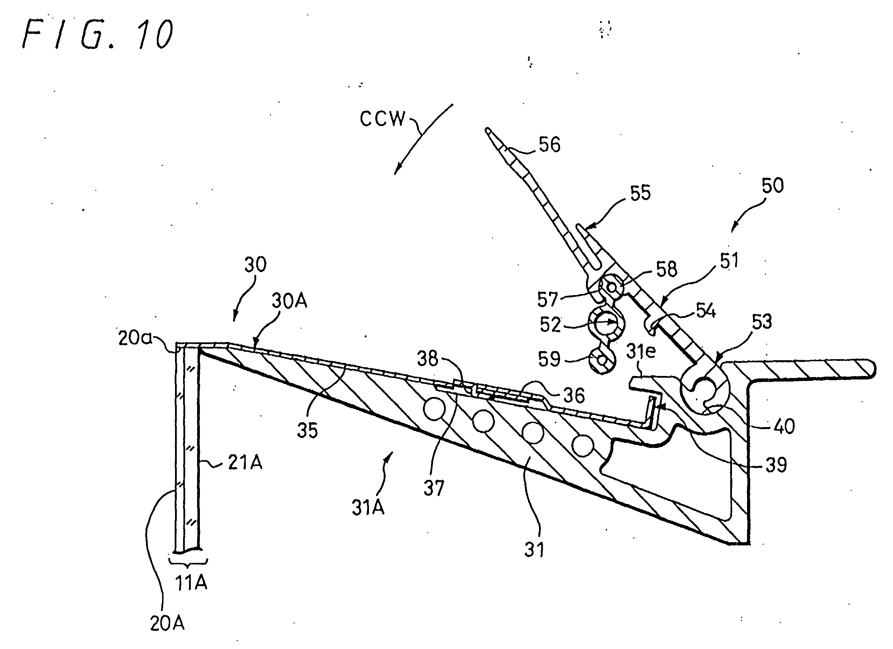

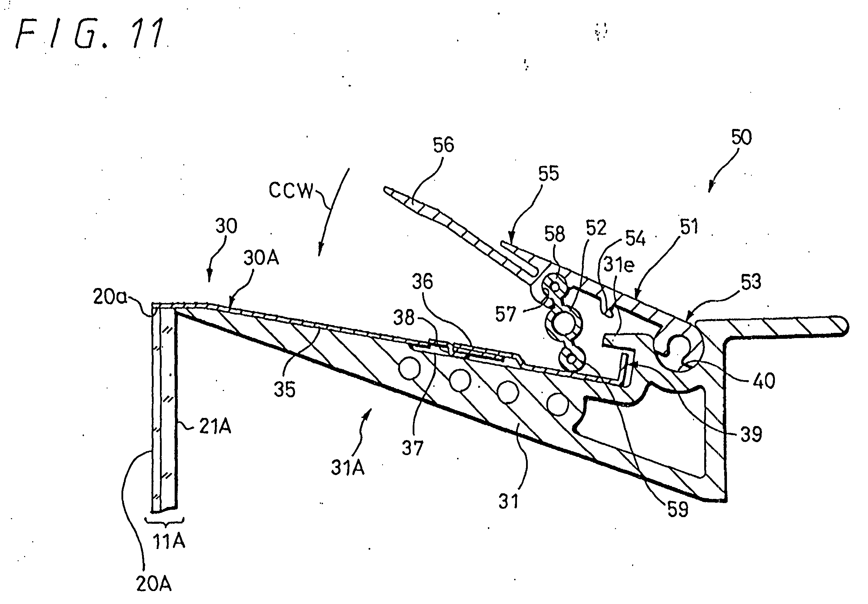

The tense state keeping means 50 has the operating member 51 and the resilient member 52, as shown in FIG. 3, Fig. 4 and FIG. 9. The operating member 51 includes a fitting portion 53 fitted into the recess 40 of the screen frame 31, a projection 54, a recess 57 to which one end 58 of the resilient member 52 is fitted, a tip portion 55, a pressing portion 56 and the like. The operating member 51 is made of, e.g. metal or plastics. Likewise, the screen frame 31 is made of, e.g. metal or plastics. The fitting portion 53 is made nearly circular in sectional view and this fitting portion 53 is fitted to the recess 40 which is nearly circular in sectional view. Accordingly, an operator can turn the operating member 51 around the fitting portion 53 in the direction of operation CCW as shown in FIG. 10 and FIG. 11.

One end 58 of the resilient member 52 is rotatably fitted to a projection 57 of the operating member 51. The other end 59 of the resilient member 52 is a portion for pressing the push projection 39 of the engaging member 36 in the direction of E of FIG. 3. Therefore, the resilient member 52 is made of deformable elastic materials such as rubber or plastics. Namely, the resilient member 52 is formed such that at least a hollow portion is formed in a central portion seen in cross-section, and this hollow portion is deformed resiliently.

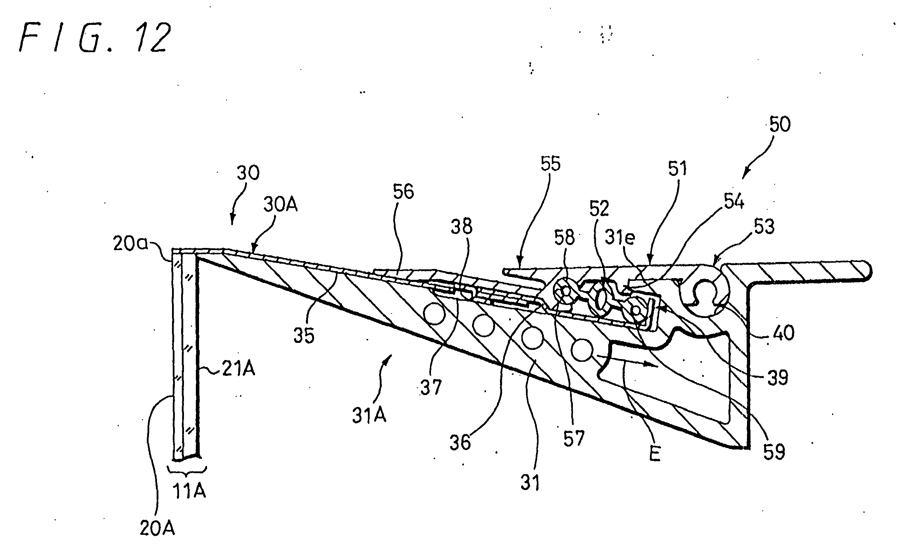

The pressing portion 56 is, as shown in FIG. 3 and FIG. 12, arranged so that, when the operating member 51 has been placed horizontal, the pressing portion may press a part of the film body 30 and the engaging member 36 from above down onto the retaining face 35 and the recess 37 of the screen frame 31 for retaining.

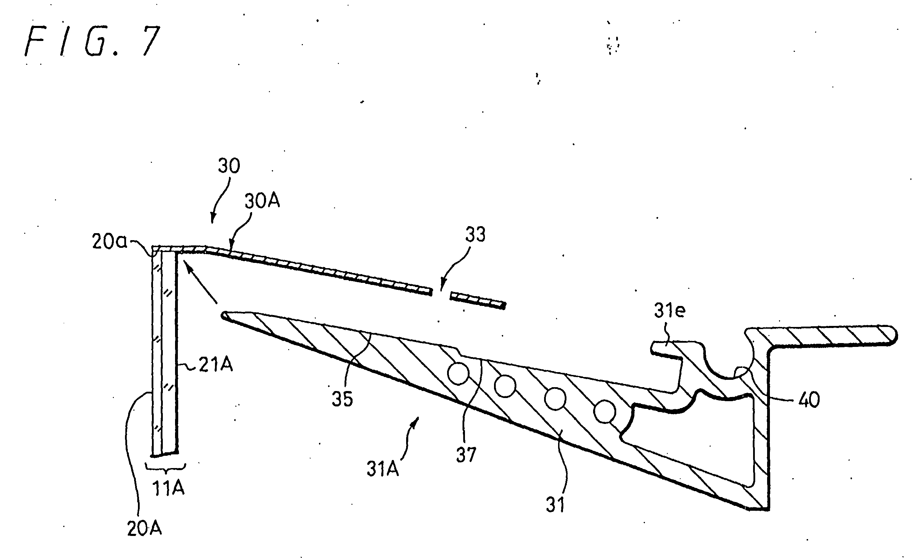

Next, with reference to FIG. 7 to FIG. 12, a process for assembling and retaining the film structure 30, the split lenticular lens 20A, the split Fresnel lens 21A and the screen frame 31 shown in FIG. 2 will be described.

Referring to FIG. 7, the first side 30A to the fourth side 30 D of the film structure 30 are fixed to the first end face 20a to the fourth end face 20d of the split lenticular lens 20A by means of an adhesive, respectively. After the adhesive of the film structure 30 has been cured, the split Fresnel lens 21A is arranged to superpose on the split lenticular lens 20A, and besides, to fit inside the film structure 30 as shown in FIG. 8. The screen frame 31 is made to locate inside the first side 30A to the fourth side 30D of the film structure 30.

As is shown in FIG. 8, the projection 38 of the engaging member 36 is inserted into each hole 33 of the film structure 30 to be engaged with each other, thereby making the engaging member 36 to be arranged in the recess 37 of screen frame 31 as shown in FIG. 9. The fitting portion 53 of the operating member 51 is fitted into the recess 40 of the screen frame 31 under the state that one end of the resilient member 52 is fitted to the recess 57 of the operating member 51 in the manner as shown in FIG. 9 and FIG. 10. In this case, when the hole 33 of the film body 30 is made as an elongated hole, upon inserting the projection 38 of the engaging member 36 into the hole 33, a margin is presented for the position of the projection 38 in the longitudinal direction of the hole 33. Therefore, the insertion work of projection 38 into the hole 33 of film body 30 becomes easy and consequently the retaining work of film body 30 becomes easy to make the screen assembling process easy.

Next, as shown in FIG. 10 and FIG. 11, when the operating member 51 is slightly turned in the direction of operation CCW, a state in which the other end 59 of the resilient member 52 contacts the top surface of engaging member 36 is entered. In this state, the fitting portion 53 of operating member 51 is temporarily fixed to the recess 40 of screen frame 31. When the operating member 51 is further turned in the operating direction CCW as shown in FIG. 11, the pressing portion 56 is pressed onto the top surfaces of the film structure 30 and the engaging member 36, and at the same time the other end 59 of resilient member 52 presses the push projection 39 of engaging member 36 in the direction E shown in FIG. 3 and FIG. 12.

Moreover, at the same time, the projection 54 of operating member 51 engages a projection 31e of the screen frame 31, thereby.enabling the operating member 51 to be securely fixed almost horizontally relative to the screen frame 31. In this condition, the engaging member 36 and each of the sides 30A to 30D of film structure 30 are tightly pressed on to the surface side of the screen frame 31, and besides, the film structure 30 is pulled in the E direction by the elastic force of the resilient member 52, thereby this state being retained. The split Fresnel lens 21A is gripped by the split lenticular lens 20A and the rip end of screen frame 31.

In this case, when the projection 54 of operating member 51 is fitted into the projection 31e of screen frame 31, a shock noise will be caused during fitting. Therefore, the operator can distinctly recognize that a fixing operation of the film structure 30 to the screen frame 31 has been completed by the shock noise.

In the way described above, it is possible for the split lens 11A made up of the split lenticular lens 20A and the split Fresnel lens 21A to be securely fixed to the screen frame 31 using the film structure 30. Furthermore, because the very thin film structure 30 which is transparent or opaque is employed to fix such split lens 11A, there is nearly no joint between a set of components as shown in FIG. 2, i.e. the film structure 30, the split lens 11 and the screen frame 31 and an adjacent set of the same components. This enables the almost seamless type of screen 11 to be constructed.

While it is possible to securely fix the split lens 11 to the screen frame 31 using the film structure 30 for retaining as described above, when, e.g. the split lenticular lens 20A is damaged for some reason, the damaged split lenticular lens 20A can simply be exchanged in the following manner.

Specifically, when an operator raises the operating member 51 in the direction opposite to the operating direction CCW, the engagement between the projection 54 and the projection 31e will be released, thereby allowing the state of FIG. 12 to be returned to that of FIG. 10, and hence, the tensional state of the engaging member 36 and the film structure 30 can be released. And then, by detaching the engaging member 36 from the film structure 30, it is possible to exchange only the film body 30 and the split lenticular lens 20A.

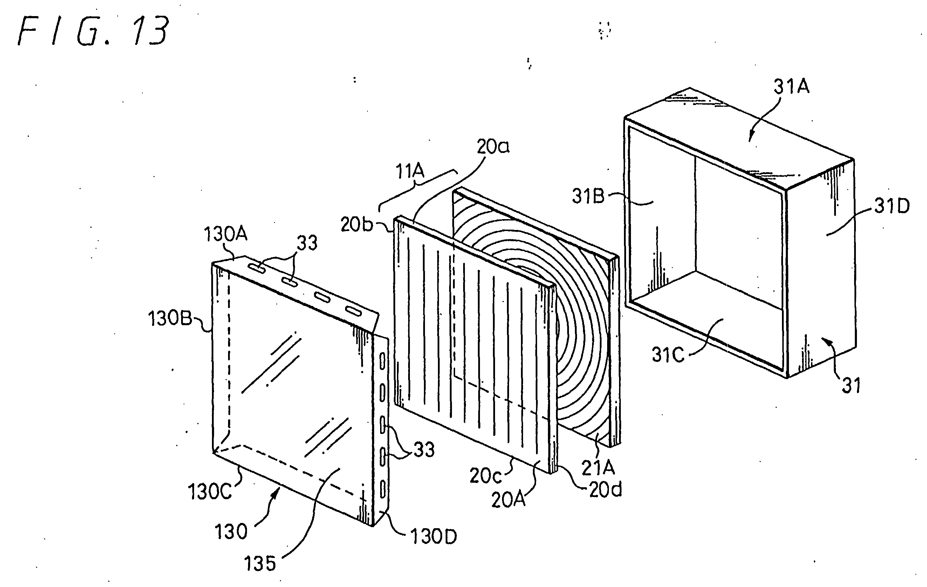

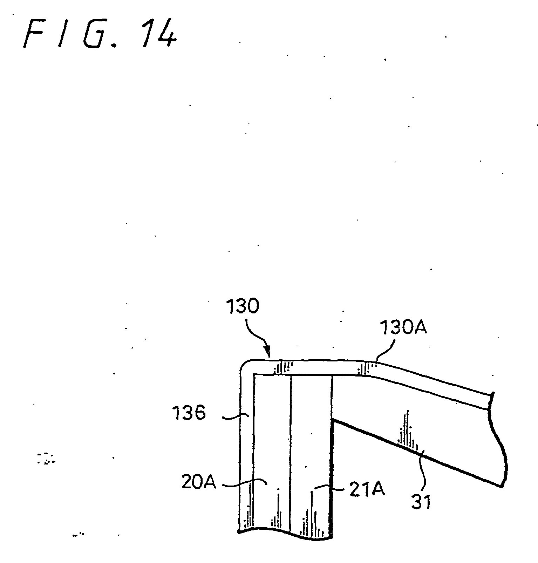

Next, FIG. 13 and FIG. 14 will be referred. FIG. 13 and FIG. 14 show another embodiment of the present invention, which differs from the embodiment of FIG. 1 to FIG. 12 in the form of the film structure 130 and so on. Because the other points of the embodiment in FIG. 13 and FIG. 14 are the same as those of FIG. 1 to FIG. 12, its illustration and description thereof will be omitted.

This film body 130 is made of a very thin film which is preferably a light transmitting or transparent film. The film body 130 has first parts 130A, 130B, 130C and 130D. Through the respective first parts 130A to 130D are formed holes 33. The film body has a second part 135 which connects these first parts 130A to 130D. This second part 135 has such a size that can cover the front surface side of the split lenticular lens 20A. In contrast, the first parts 130A to 130D cover four end faces 20a, 20b, 20c and 20d of the split lenticular lens 20A, respectively.

In the present embodiment, the film body 130 is not glued to the split lenticular lens 20A by means of an adhesive, but is arranged so that only the second part 135 may cover the front surface side of the split lenticular lens 20A.

By doing in this way, the gluing work of the film body 130 is not necessary and so the screen can more easily be assembled.

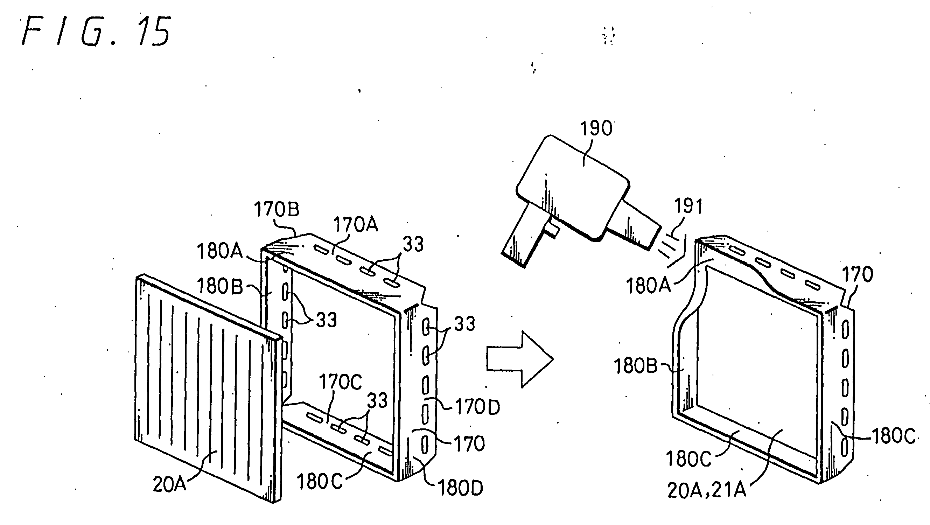

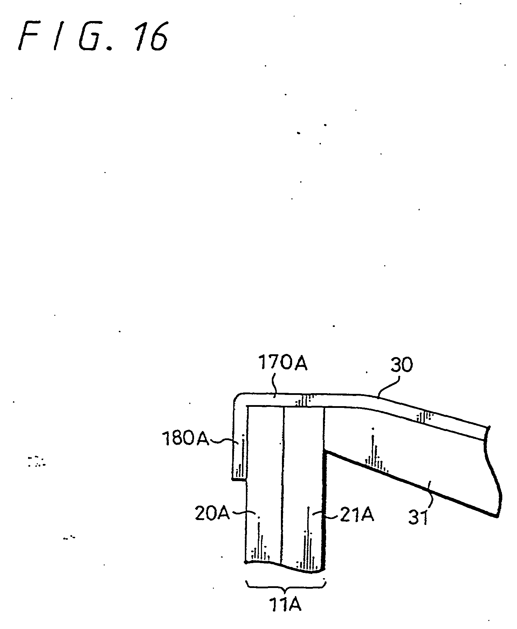

Next, further another mode for carrying out the present invention will be described with reference to FIG. 15 and FIG. 16. The mode of FIG. 15 and FIG. 16 differs in the shape of a film body 170, but is similar to that of FIG. 1 to FIG. 12 in other points, so that illustration and description thereof will be omitted.

The film body 170 is made of a heat-shrinkable film which has transparent or light transmitting property, and has end face covering parts 170A, 170B, 170C and 170D. Through these end face covering parts 170A to 170D are formed holes 33, respectively. Outer portions of the end face covering parts 170A to 170D form split lens covering parts 180A, 180B, 180C and 180D, respectively.

The split lens covering parts 180A to 180D are, as is shown in FIG. 15, those which slightly cover four corners of the front side of split lenticular lens 20A. For example, by using a hot wind 191 from a heater 190 such as a dryer or the like for causing the split lens covering parts 180A to 180D of the film body 170 to be heat-shrunk, it is possible for the split lens covering parts 180A to 180D to be turned down on a very small part of the front side of split lenticular lens 20A. This will make it possible for the film body 170 to cover four corners of the split lens structure 11A as shown in FIG. 16 for making them into one body.

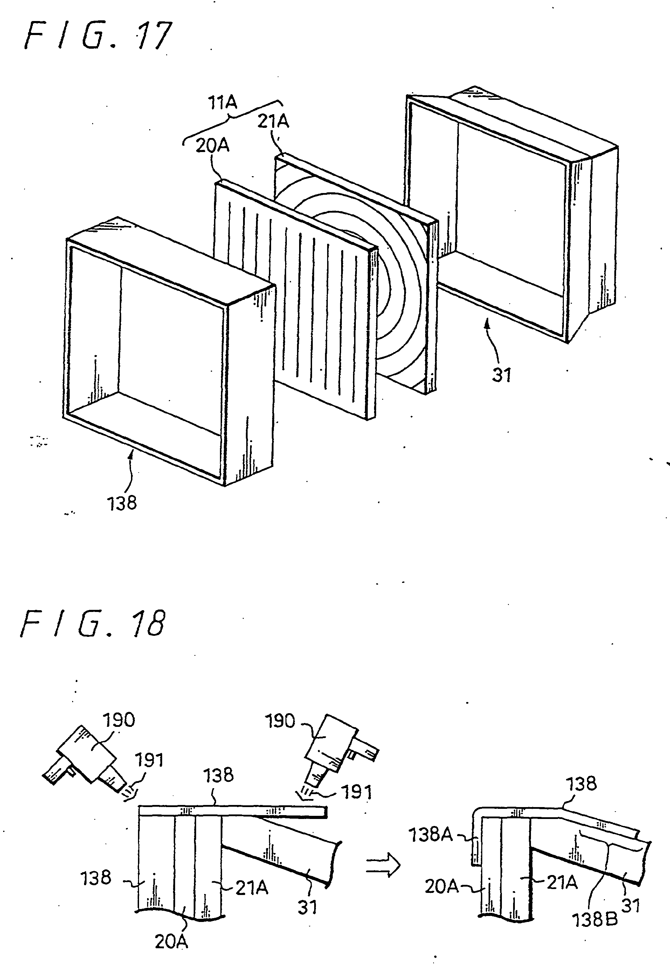

Next, yet another mode for carrying out the present invention will be described with reference to FIG. 17 to FIG. 20.

In the embodiment of FIG. 17 and FIG. 18 not part of the present invention, a film body 138 made of a transparent and heat-shrinkable film is formed in a square shape. The split lenticular lens 20A and the split Fresnel lens 21A are provisionally arranged with respect to the screen frame 31. The film body 138 is then arranged in an appropriate position relative to the screen frame 31. Subsequently, the hot wind 191 of heater 190 such as a dryer or the like is blown against the film body 138 from two directions to give it the heat, thereby causing undercut portions 138A and 138B to be closely adhered to the screen frame 31. This will make the screen frame 31 to hold the film body 138, the split lenticular lens 20A and the split Fresnel lens 21A.

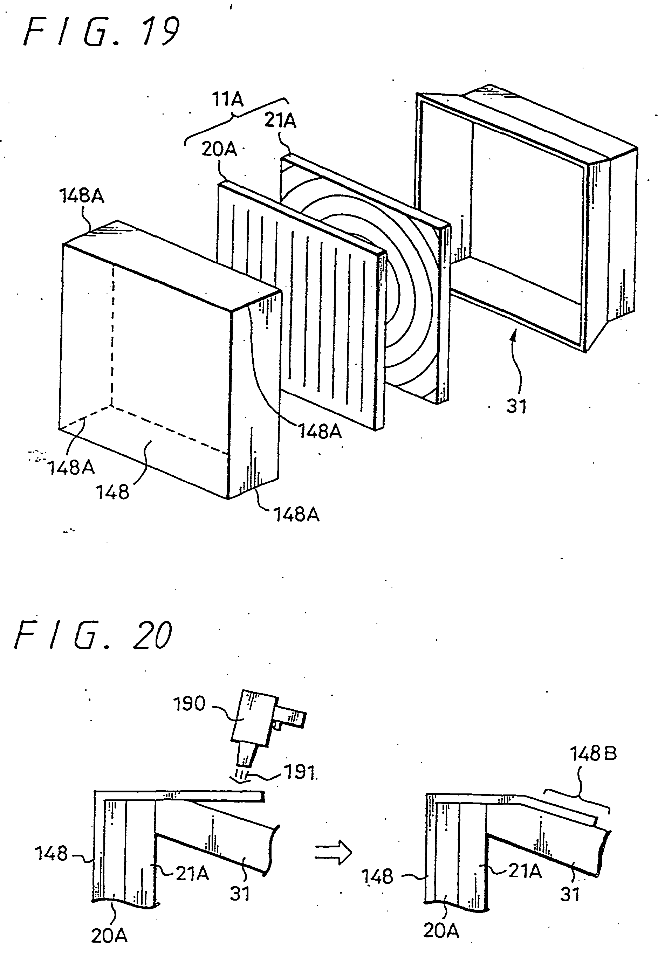

In the embodiment of FIG. 19 and FIG. 20 not part of the present invention, a film body 148 made of a transparent and heat-shrinkable film is formed in a square shape, and besides, like a bag. Seam portions 148A of the film body 148 are joined together by unifying or some other method. The split lenticular lens 20A and the split Fresnel lens 21A are inserted into the film body 148. Then, the hot wind 191 from the heater 190 such as a dryer or the like is blown against the film body 138 to give it the heat, thereby causing an undercut portion 148A to be closely adhered to the screen frame 31. This will make the screen frame 31 to hold the film body 138, the split lenticular lens 20A and the split Fresnel lens 21A.

FIG. 21 and FIG. 22 respectively show the main portions of further modes for carrying our the present invention. The other structure thereof not shown are similar to the embodiment shown in FIG. 1 to FIG. 12 so that the explanation thereof will be omitted.

One split lenticular lens 20A forming the split lens 11A is comprised of, on its front face, a stripe-like first lens 23 and, between the first lenses 23, a stripe-like portion 25 having, for example, a black stripe 24 with no lens action and absorbing light on its surface and on approximately the same plane and a stripe-like second lens 26 on the rear face.

In the embodiment of FIG. 21, the film body 30, which is formed of first portions 130A to 130D with holes 33 to cover the end face of split lens and of the second portion 135 to cover the whole surface of split lens similar to the film body shown in FIG. 13 and FIG. 14, is employed. The front side of split lenticular lens 20A is covered with the second portion 135 of film body 130 and the stripe portion 25 with no lens action of split lenticular lens 20A is fixed to the second portion 135 of film body 130 by means of an adhesive. Thereafter, the split Fresnel lens 21A is disposed in the film body 130 so as to be superposed on the split lenticular lens 20A.

According to this structure, the second portion 135 of film body 130 on the front side and the stripe portion 25 with no lens action of split lenticular lens 20A are glued so that the glued portion thereof becomes much as compared with FIG. 2 and FIG. 3 mentioned before. Thus, the bond strength is strong and hence it is suitable to a rental use wherein the assembly and disassembly are repeated.

In the embodiment of FIG. 22, in addition to the arrangement of FIG. 21, a stripe-like light absorbing portion 27 is formed on the outer face of second portion 135 of film body 130 at substantially the same portion as the black stripe 24 of split lenticular lens 20A.

According to this structure, as compared with the embodiments of FIG. 13 and FIG. 21 described before, the contrast can be improved further. That is, in the structures of FIG. 13 and FIG. 21, since the black stripe 24 on the surface of split lenticular lens 20A for improving the contrast is covered by the film body 130, there may be such a fear that the contrast ratio is lowered by the surface reflection. In case of the structure shown in FIG. 22, since the light absorbing portion 27 is provided on the outer face of film body 130 corresponding to the black stripe 24 of split lenticular lens 20A, the surface reflection is controlled to thereby improve the contrast ratio.

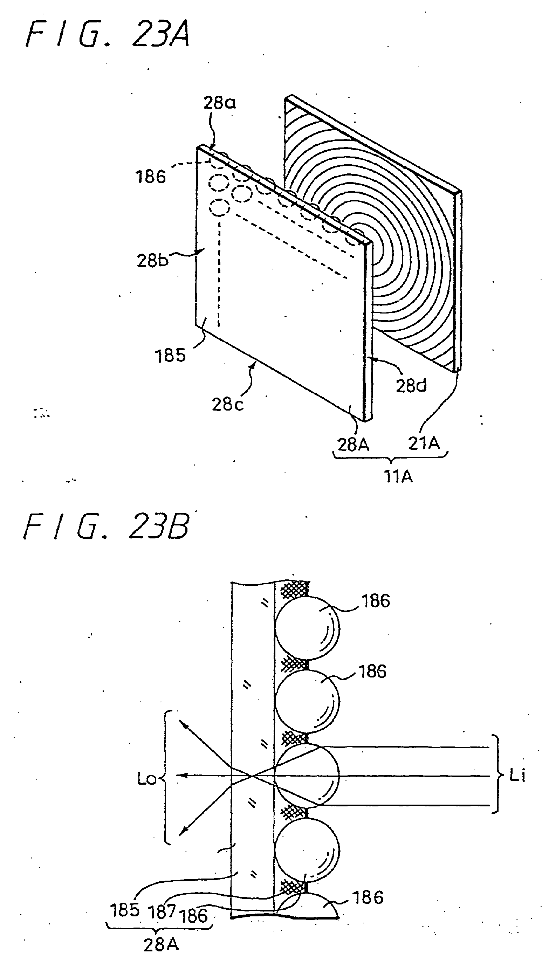

While in the embodiments described above the split lens 11A is composed of the split lenticular lens 20A and the split Fresnel lens 21A, in addition thereto as shown in FIG. 23A, the split lens. 11A may be composed of a split bead lens 28A and the split Fresnel lens 21A. As shown in an enlarged FIG. 23B, for example, the split bead lens 28A is formed such that a number of transparent fine spherical bodies 186 made of, for example, glass beads are arranged closely or in contact one another on a colored layer 187 having a bonding property or adhesive property on one face of a transparent substrate 185 made of a glass substrate or plastic substrate having, for example, rigidity or so-called flexible substrate having flexibility in such a manner that transparent fine spherical bodies are partially buried in the colored layer and in a two-dimensional function. The transparent fine spherical body 186 has a large refractive index.

When an incident light Li, which is arranged as a parallel light, is introduced to the split bead lens 28A from the transparent fine spherical body 186 side, since the light is converged and diverged by the lens effect of the transparent fine spherical body 186, an output light L0 diverges. When the split lens 11A made up of the split bead lens 28A and the split Fresnel lens 21A is used, the split lens 11A can be retained similarly by using the film body 30 of FIG. 2, FIG. 3, FIGS. 5A, B; the film body 130 of FIG. 13, FIG. 14; the film body 1700 of Fig. 15, FIG. 16; the film body 138 of FIG. 17, FIG. 18; the film body 148 of FIG. 19, FIG. 20; and so on.

When the film body 30 is employed, the portions of the first side 30A to the fourth side 30D of film body 30 are glued to a first end face 28a, a second end face 28b, a third end face 28c, a fourth end face 28d of split bead lens 28A by means of an adhesive, for example.

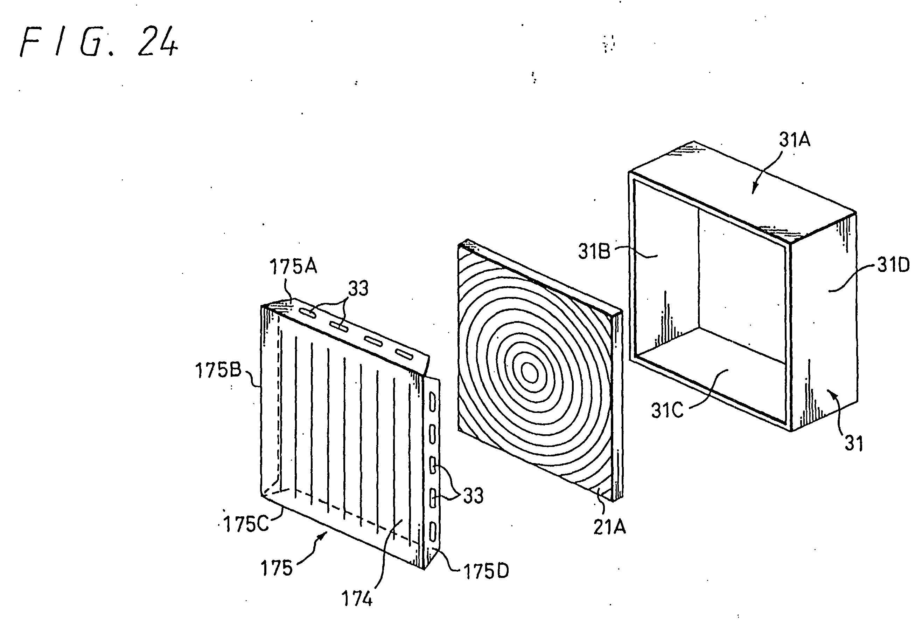

Next, still further modes for carrying out the present invention will be explained with reference to FIG. 24 to FIG. 27.

In respective modes of FIG. 24 to FIG. 26 and FIG. 27, a film body 175 and the split lens 11A are different in structure, and the outer points are similar to the mode in FIG. 1 to FIG. 12, so that illustration and description thereof are omitted.

The film body 175 is formed of a light transmitting or transparent film. This film body 175 comprises first portions 175A, 175B, 175C, 175D corresponding to the four sides to cover the four end faces of split Fresnel lens 21A forming the split lens 11A, and a second portion 174 connected to the first portions 175A to 175D and to cover whole the surface of lens face of split Fresnel lens 21A. This second portion 174 is given with a light diffusion function of, for example, a lenticular lens, a diffusion plate, a bead lens or the like. Holes 33 are formed through each of the first portions 175A to 175D.

Namely, in the film body 175 used in the mode of FIG. 24 to FIG. 26, a split lenticular lens 176 is formed on its second portion 174 and the first portions 175A to 175D with the thickness less than 0.5mm are formed to be bent from and continued to the split lenticular lens 176. In such a film body 175, a first lens 176a and a second lens 176b constructing the split lenticular lens 176 are formed on both surfaces of a film element body 177, and the part of the film element body 177 bent from the split lenticular lens 176 may form the first portions 175A to 175D. 178 is a black stripe.

In this mode, the split Fresnel lens 21A forming the split lens is arranged to be superposed on the second portion 174 of film body 175 where the split lenticular lens 176 is formed. By this arrangement, it becomes unnecessary to form the split lenticular lens 20A separately so that the number of parts of lens as the split lens 11A can be decreased.

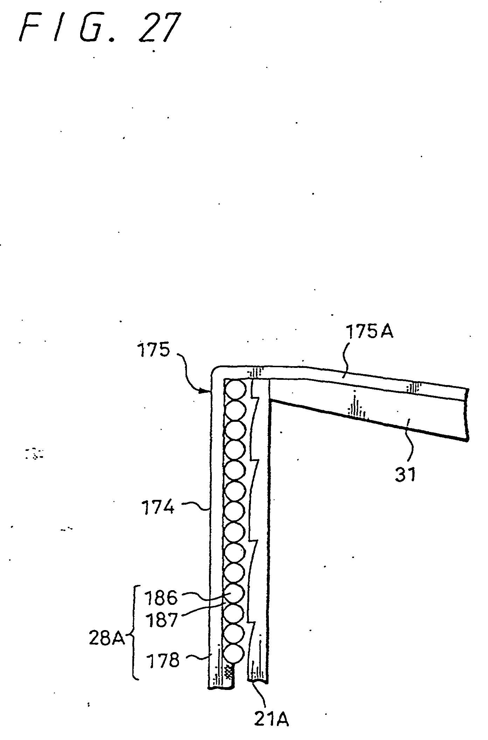

Further, in the film body 175 used in the mode of FIG. 27, the split bead lens 28A is formed on its second portion 174 and the first portion 175A to 175D with the thickness less than 0.5mm are bent from and continued to the split bead lens 28A.

By the way, such a film body 175 may be formed in such a manner that a number of transparent fine spherical bodies 186 are arranged on the transparent film element 178 similar to the manner mentioned above to form the split bead lens 28A, and a part of film element body 178 bent from the split beads lens 28A is formed as the first portions 175A to 175D.

In this mode, the second portion 174, where the split bead lens 28A of film body 175 is formed, is superposed with the Fresnel lens 21A constructing the split lens. According to this arrangement, it becomes unnecessary to form the split bead lens 28A separately and hence the number of parts of lens as the split lens 11A can be decreased.

Incidentally, the present invention is not restricted to the aforesaid embodiments.

In the aforesaid embodiments, as shown in FIG. 1, for example, three cathode ray tubes are arranged in a picture generating section of the image apparatus, whereas an alternative thereto, by way of example, a light source lamp, a liquid crystal panel, an optical space modulation element such as a DMD or the like and a projecting lens can be utilized. Moreover, in the aforesaid embodiments of mode, the split lens is made up of the split lenticular lens and the split Fresnel lens, whereas without being limited thereto the split lens can be made of a single lens.

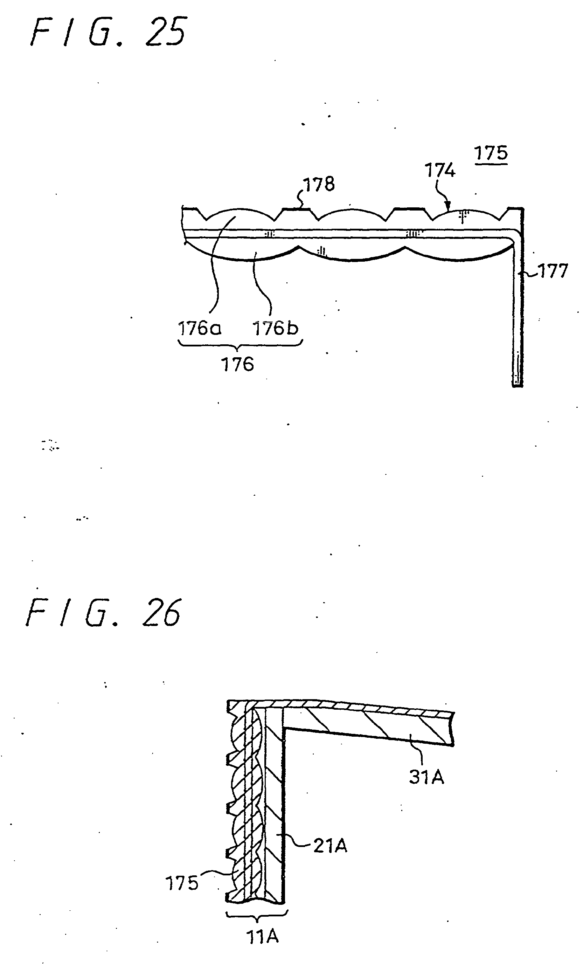

The lenticular lens of FIG. 25 is the lens on the both sides of the film element body, but it may be on one side thereof only.

While the lenticular and the bead are illustrated as the diffusing method a diffusing film mixed with a fine filler or the like may be good.

Furthermore, the resilient member 52 shown in FIG. 3 is not limited to what is made of elastic materials such as rubber, or plastics or the like. A coil spring or leaf spring-like one can be employed therefor.

According to the present invention, by arranging a plurality of units, each being comprised of the film body 30, the split lens 11A and the screen frame 31 as shown in FIG. 2, it is possible to form a large screen with a desired size. Moreover, because the film body 30 is employed in each unit shown in FIG. 2, the width of the joint between the adjacent units can be made very small, e.g. 0.2mm, the sum of thickness forming the width of joint between adjacent units amounts to only 0.4mm, so that the retaining apparatus according to the present invention can reduce the missing proportion of picture approximately between one tenth to one fourth as compared with the conventional one.

In addition, because it is arranged that the film body is made tense simply by an operator's operating the operating member to hold the split lens against the screen frame, it is possible to assemble simply the picture screen in an assembly plant and reduce the cost of assembly to, e.g. about one fourth as compared with the existing seamless screen structure.

## Claims

1. A retaining apparatus for a backproject screen (11) which holds a split lens (11A) in order to project a picture light from the back of a screen (11) made up of a plurality of such split lenses (11A), and comprises a retaining member (31) for holding a film body (30),
the retaining member (31) has a retaining surface (35) surrounding and extending rearwardly away from the split lens (11A);
**characterised in that**:
the film body (30) is connected to the peripheral end faces of the split lens (11A) and the film body (30) having an engaging portion (33) arranged on the retaining surface (35);
an engaging member (36) which is set on the retaining surface of the retaining member and engaged with the engaging portion (33) of the film body (30); and
a tense state keeping means (50) which maintains a state in which the film body (30) is made tense by moving the engaging member along the retaining surface (35) of the retaining member (31) so that the split lens (11A) is held against the retaining member (31).

2. The retaining apparatus according to claim 1, wherein the engaging portion (33) of the film body (30) is a hole (33) into which a projection (38) of the engaging member (36) is fitted.

3. The retaining apparatus according to claim 1 or 2, wherein the tense state keeping means (50) includes:
an operating member (51) for moving the engaging member (36) along the retaining surface (35) of the retaining member (31); and
a resilient member (52) which is arranged between the operating member (51) and the engaging member (31), and holds the engaging member (51) elastically on the retaining member (31) after the engaging member (51) has been moved by the operating member (51).

4. The retaining apparatus according to claim 1 or 2, wherein the tense state keeping means (50) has a pressing portion (56) arranged to press the film body (30) against the retaining surface (35).

5. The retaining apparatus according to claim 3, wherein the operating member (51) has a pressing portion (56) arranged to press the film body (30) against the retaining surface (35).

6. The retaining apparatus according to any one of the preceding claims, wherein the retaining surface (35) is inclined inwardly towards the split lens (11A).

7. The retaining apparatus according to any one of claims 1 to 6, wherein the split lens (11A) has four end faces (20a-20d) and the film body (30) is fixed on the four end faces (20a-20d) of the split lens (11A) by gluing thereto.

8. The retaining apparatus according to any one of claims 1 to 6, wherein the split lens (11A) has four end faces (20a-20d) and the film body (130) is of a light transmissive nature and has a first part (130A-130D) covering the four end faces (20a-20d) of the split lens (11A) and a second part (135) covering an entire lens surface of the split lens (11A).

9. The retaining apparatus according to claim 8, wherein the split lens (11A) has portions having no lens action (25) and extending along substantially the same plane, and the film body (130) is bonded to said portions (25).

10. The retaining apparatus according to claim 9, wherein said portions (25) are light absorbing and a light absorbing portions (27) is provided on an outer face of the film body (130) at substantially the same positions as said portions (25) of the split lens (11A).

11. The retaining apparatus according to any one of claims 8 to 10, wherein the second part (135) of the film body (170) is formed as a split lens and a thickness of the first portion is set less than 0.5mm.

12. The retaining apparatus according to any one of claims 1 to 6, wherein the split lens (11A) has four end faces (20a-20d) and the film body (170) has an end face covering part (170A-170D) which covers the four end faces (20a-20d) of the split lens (11A) and a split lens covering part (180A-180D) which covers part of the lens surface of the split lens (11A).

13. The retaining apparatus according to any one of claims 1 to 6, wherein the split lens (11A) is made up of a lenticular lens (20A) and a Fresnel lens (21A).

14. The retaining apparatus according to claim 13, wherein the film body (30) is fixed on the end face (20a-20d) of the lenticular lens (20A) of the split lens by gluing thereto.

15. The retaining apparatus according to any one of claims 1 to 6, wherein the split lens is made up of a bead lens (28A) and a Fresnel lens (21A).

16. The retaining apparatus according to claim 15, wherein the film body (30) is bonded on and fixed to an end face of bead lens (28A) of the split lens (11A).

## Patentansprüche

1. Haltevorrichtung für einen Durchsichtprojektionsschirm (11), welcher eine Aufspalt-Linse (11A) hält, um ein Bildlicht von der Rückseite eines Schirms (11) zu projizieren, der aus einer Mehrzahl von Aufspalt-Linsen (11A) gemacht ist, und ein Halteglied (31) zum Halten eines Filmkörpers (30) aufweist,
wobei das Halteglied (31) eine Haltefläche (35) hat, die die Aufspalt-Linse (11A) umschließt und noch rückwärts von dieser wegragt;
**dadurch gekennzeichnet, dass**
der Filmkörper (30) an die periphere Endfläche der Aufspalt-Linse (11A) anschließt und der Filmkörper (30), der einen Eingriffsabschnitt (33) hat, an der Haltefläche (35) angeordnet ist;
ein Eingriffsglied (36) an der Haltefläche des Eingriffsgliedes aufgesetzt ist und mit dem Eingriffsabschnitt (33) des Filmkörpers (30) eingreift; und
ein Vorspannungszustand-Haltemittel (50), welches einen Zustand beibehält, in welchem der Filmkörper (30) durch eine Bewegung des Eingriffsgliedes entlang der Haltefläche (35) des Halteglieds (31) vorgespannt wird, so dass die Aufspalt-Linse (11A) gegen das Halteglied (31) gehalten wird.

2. Haltevorrichtung nach Anspruch 1, worin der Eingriffsabschnitt (33) des Filmkörpers (30) eine Öffnung (33) ist, in welche ein Vorsprung (38) des Eingriffsgliedes (36) eingepasst ist.

3. Haltevorrichtung nach Anspruch 1 oder 2, worin das Vorspannungszustand-Haltemittel (50) aufweist:
ein Betätigungsglied (51) zum Bewegen des Eingriffsglieds (36) entlang der Haltefläche (35) des Haltegliedes (31); und
ein Spannglied (52), welches zwischen dem Betätigungsglied (51) und dem Eingriffsglied (31) angeordnet ist und das Eingriffsglied (51) elastisch an dem Halteglied (31) hält, nachdem das Eingriffsglied (51) durch das Betätigungsglied (51) bewegt worden ist.

4. Haltevorrichtung nach Anspruch 1 oder 2, worin das Vorspannungszustand-Haltemittel (50) einen Druckabschnitt (56) hat, der eingerichtet ist, um den Filmkörper (30) gegen die Haltefläche (35) zu drücken.

5. Haltevorrichtung nach Anspruch 3, worin das Betätigungsglied (51) einen Druckabschnitt (56) hat, der eingerichtet ist, um den Filmkörper (30) gegen die Haltefläche (35) zu drücken.

6. Haltevorrichtung nach einem der vorher gehenden Ansprüche, worin die Haltefläche (35) nach innen zur Aufspalt-Linse (11A) geneigt ist.

7. Haltevorrichtung nach einem der Ansprüche 1 bis 6, worin die Aufspalt-Linse (11A) vier Endflächen (20a-20d) hat und der Filmkörper (30) an den vier Endflächen (20a-20d) der Aufspalt-Linse (11A) durch Verkleben fixiert ist.

8. Haltevorrichtung nach einem der Ansprüche 1 bis 6, worin die Aufspalt-Linse (11A) vier Endflächen (20a-20d) hat und der Filmkörper (130) von einer lichtdurchlässigen Art ist und hat einen ersten Teil (130A-130D), der die vier Endflächen (20a-20d) der Aufspalt-Linse (11A) abdeckt und einen zweiten Teil (135), der eine ganze Linsenoberfläche der Aufspalt-Linse (11A) abdeckt.

9. Haltevorrichtung nach Anspruch 8, worin die Aufspalt-Linse (11A) Abschnitte aufweist, die keine Linsenfunktion (25) haben und sich im Wesentlichen entlang der gleichen Oberfläche erstrecken und der Filmkörper (130) an die Abschnitte (25) gebondet ist.

10. Haltevorrichtung nach Anspruch 9, worin die Abschnitte (25) Licht absorbierend sind und ein Lichtabsorbierungsabschnitt (27) an der Außenfläche des Filmkörpers (130) an den im Wesentlichen gleichen Positionen, wie die Abschnitte (25) der Aufspalt-Linse (11A) vorgesehen ist.

11. Haltevorrichtung nach einem der Ansprüche 8 bis 10, worin der zweite Teil (135) des Filmkörpers (170) als eine Aufspalt-Linse geformt ist und eine Dicke des ersten Abschnitts kleiner ist, als 0,5 mm.

12. Haltevorrichtung nach einem der Ansprüche 1 bis 6, worin die Aufspalt-Linse (11A) vier Endflächen (20a-20d) hat und der Filmkörper (170) einen Endflächen-Abdeckungsteil (170A-170D) hat, welcher die vier Endflächen (20a-20d) der Aufspalt-Linse (11A) abdeckt und einen Aufspalt-Linsen-Abdeckungsteil (180A-180D), welcher einen Teil der Linsenoberfläche der Aufspalt-Linse (11A) abdeckt.

13. Haltevorrichtung nach einem der Ansprüche 1 bis 6, worin die Aufspalt-Linse (11A) aus einer linsenförmigen Linse (20A) und einer Fresnel-Linse (21A) aufgebaut ist.

14. Haltevorrichtung nach Anspruch 13, worin der Filmkörper (30) an den Endflächen (20a-20d) der linsenförmigen Linse (20A) der Aufspalt-Linse durch Verkleben fixiert ist.

15. Haltevorrichtung nach einem der Ansprüche 1 bis 6, worin die Aufspalt-Linse (11A) aus einer Kugel-Linse (28A) und einer Fresnel-Linse (21A) aufgebaut ist.

16. Haltevorrichtung nach Anspruch 15, worin der Filmkörper (30) an der Endfläche der Kugel-Linse (28A) der Aufspalt-Linse (11A) gebondet und fixiert ist.

## Revendications

1. Appareil de maintien d'un écran de projection par transparence (11) qui maintient une bilentille (11A) afin de projeter une image lumineuse depuis l'arrière d'un écran (11), fait d'une pluralité de telles bilentilles (11A), et comprend un élément de maintien (31) pour maintenir un corps de film (30),
l'élément de maintien (31) a une surface de maintien (35) entourant et s'étendant vers l'arrière en s'éloignant de la bilentille (11A) ;
**caractérisé en ce que** :
le corps de film (30) est connecté aux faces d'extrémité périphérique de la bilentille (11A) et le corps de film (30) ayant une partie de prise (33) agencé sur la surface de maintien (35) ;
un élément de prise (36) qui est monté sur la surface de maintien de l'élément de maintien et en prise avec la partie de prise (33) du corps de film (30) ; et
des moyens pour garder l'état de tension (50) qui maintiennent un état dans lequel le corps de film (30) est tendu en déplaçant l'élément de prise le long de la surface de maintien (35) de l'élément de maintien (31) de telle manière que la bilentille (11A) est maintenue contre l'élément de maintien (31).

2. Appareil de maintien selon la revendication 1, dans lequel la partie de prise (33) du corps de film (30) est un trou (33) dans lequel une saillie (38) de l'élément de prise (36) est montée.

3. Appareil de maintien selon la revendication 1 ou 2, dans lequel les moyens pour garder l'état de tension (50) comprennent :
un élément fonctionnel (51) pour déplacer l'élément de prise (36) le long de la surface de maintien (35) de l'élément de maintien (31) ; et
un élément élastique (52) qui est agencé entre l'élément fonctionnel (51) et l'élément de maintien (31), et maintient l'élément fonctionnel (51) élastiquement sur l'élément de maintien (31) après que l'élément de prise (51) a été déplacé par l'élément fonctionnel (51).

4. Appareil de maintien selon la revendication 1 ou 2, dans lequel les moyens pour garder l'état de tension (50) ont une partie de pression (56) agencée pour presser le corps de film (30) contre la surface de maintien (35).

5. Appareil de maintien selon la revendication 3, dans lequel l'élément fonctionnel (51) a une partie de pression (56) agencée pour presser le corps de film (30) contre la surface de maintien (35).

6. Appareil de maintien selon l'une quelconque des revendications précédentes, dans lequel la surface de maintien (35) est inclinée vers l'intérieur vers la bilentille (11A).

7. Appareil de maintien selon l'une quelconque des revendications 1 à 6, dans lequel la bilentille (11A) a quatre faces d'extrémité (20a-20d) et le corps de film (30) est fixé sur les quatre faces d'extrémité (20a-20d) de la bilentille (11A) en le collant dessus.

8. Appareil de maintien selon l'une quelconque des revendications 1 à 6, dans lequel la bilentille (11A) a quatre faces d'extrémité (20a-20d) et le corps de film (130) est de nature transmettant la lumière et a une première partie (130A-130D) couvrant les quatre faces d'extrémité (20a-20d) de la bilentille (11A) et une seconde partie (135) couvrant une surface de lentille entière de la bilentille (11A).

9. Appareil de maintien selon la revendication 8, dans lequel la bilentille (11A) a des parties n'ayant pas d'action de lentille (25) et s'étendant le long de sensiblement le même plan, et le corps de film (130) est collé sur lesdites parties (25).

10. Appareil de maintien selon la revendication 9, dans lequel lesdites parties (25) absorbent la lumière et des parties absorbant la lumière (27) sont placées sur une face extérieure du corps de film (130) dans sensiblement les mêmes positions que lesdites parties (25) de la bilentille (11A).

11. Appareil de maintien selon l'une quelconque des revendications 8 à 10, dans lequel la seconde partie (135) du corps de film (170) est formée comme une bilentille et une épaisseur de la première partie est réglée inférieure à 0,5 mm.

12. Appareil de maintien selon l'une quelconque des revendications 1 à 6, dans lequel la bilentille (11A) a quatre faces d'extrémité (20a-20d) et le corps de film (170) a une partie de recouvrement de face d'extrémité (170A-170D) qui couvre les quatre faces d'extrémité (20a-20d) de la bilentille (11A) et une partie de recouvrement de bilentille (180A-180D) qui couvre une partie de la surface de lentille de la bilentille (11A).

13. Appareil de maintien selon l'une quelconque des revendications 1 à 6, dans lequel la bilentille (11A) est faite d'une lentille lenticulaire (20A) et d'une lentille de Fresnel (21A).

14. Appareil de maintien selon la revendication 13, dans lequel le corps de film (30) est fixé sur la face d'extrémité (20a-20d) de la lentille lenticulaire (20A) de la bilentille en la collant dessus.

15. Appareil de maintien selon l'une quelconque des revendications 1 à 6, dans lequel la bilentille est faite d'une lentille à perles (28A) et une lentille de Fresnel (21A).

16. Appareil de maintien selon la revendication 15, dans lequel le corps de film (30) est collé sur et fixé sur une face d'extrémité de la lentille à perles (28A) de la bilentille (11A).
